# EUROPÄISCHE PATENTSCHRIFT

(11) **EP 2 412 511 B1**
(45) Veröffentlichungstag und Bekanntmachung des Hinweises auf die Patenterteilung: **22.08.2018**
(21) Anmeldenummer: 11172989.3
(22) Anmeldetag: 07.07.2011
(51) Int. Cl.: B29C 49/42, B29C 49/46, B29C 49/64, B29C 35/08, H05B 3/00

(54) **Vorrichtung und Verfahren zum Erwärmen von Kunststoffvorformlingen mit Sterilraum**
Device and process for heating plastic pre-forms with a sterile area
Procédé et dispositif de chauffage d'ébauches en matière synthétique dotées d'un espace stérile

(30) Priorität: 30.07.2010 DE 102010032964
(43) Veröffentlichungstag der Anmeldung: 01.02.2012
(73) Patentinhaber: Krones AG, 93073 Neutraubling (DE)
(72) Erfinder: Klaus, Voth, 93073 Neutraubling (DE)
(74) Vertreter: Bittner, Bernhard

(56) Entgegenhaltungen:
- EP-A1- 1 122 168
- EP-A1- 2 279 850
- EP-A2- 2 138 298
- WO-A1-97/20678
- WO-A1-2006/105769
- WO-A1-2009/010505
- WO-A2-2010/020529
- DE-A1- 10 121 160
- US-A1- 2003 077 349
- US-A1- 2009 317 506
- US-B1- 6 562 281

## Beschreibung

Die vorliegende Erfindung bezieht sich auf eine Vorrichtung zum Erwärmen bzw. Heizen von Kunststoffvorformlingen. Aus dem Stand der Technik sind so genannte Blasmaschinen bekannt, welche Kunststoffvorformlinge durch Beaufschlagung mit Druckluft zu Kunststoffbehältnissen umformen. Zu diesem Zweck werden in diese Blasmaschine die umzuformenden Kunststoffvorformlinge eingeführt und dort expandiert. Die Kunststoffvorformlinge werden in der Regel vor der Blasmaschine erwärmt, um so im erwärmten bzw. weichen Zustand expandiert zu werden. Hierzu sind aus dem Stand der Technik Heizeinrichtungen bzw. Öfen bekannt, welche von dem Kunststoffvorformling durchlaufen werden und welche während dieses Durchlaufs die Kunststoffvorformlinge aufheizen.

EP2138298 A2 offenbart eine Vorrichtung und ein Verfahren gemäß den Oberbegriffen der Ansprüche 1 und 13. Aus dem Stand der Technik sind auch so genannte Sterilanwendungen bekannt, bei denen die Kunststoffbehältnisse unter sterilen Bedingungen abgefüllt werden. Zu diesem Zweck werden üblicher Weise die Behältnisse vor der Befüllung innen und außen sterilisiert und während des Füllvorganges durch einen Reinraum bzw. Sterilraum geführt. Diese Sterilisationsprozesse sind jedoch oft relativ aufwendig.

Der vorliegenden Erfindung liegt daher die Aufgabe zugrunde, bei steril zu behandelnden Behältnissen deren Herstellung zu vereinfachen. Dies wird erfindungsgemäß durch eine Vorrichtung und ein Verfahren nach den unabhängigen Ansprüchen 1 und 13 erreicht. Vorteilhafte Ausführungsformen und Weiterbildungen sind Gegenstand der Unteransprüche.

Eine Vorrichtung zum Erwärmen von Kunststoffvorformlingen weist eine Transporteinrichtung auf, welche die Kunststoffvorformlinge entlang eines vorbestimmten Transportpfades transportiert. Weiterhin ist wenigstens eine Erwärmungseinrichtung vorgesehen, welche die Kunststoffvorformlinge während ihres Transports entlang des Transportpfades erwärmt. Der Transportpfad der Kunststoffvorformlinge verläuft wenigstens abschnittsweise durch einen Sterilraum, wobei dieser Sterilraum durch wenigstens eine und bevorzugt eine Vielzahl von Wandungen gegenüber der Umgebung abgegrenzt ist.

Es wird daher vorgeschlagen, nicht nur die Abschnitte des Füllens der Behältnisse unter sterilen Bedingungen ablaufen zu lassen, sondern auch bereits das Erwärmen der Kunststoffvorformlinge. So wäre es möglich, dass die Kunststoffvorformlinge vor ihrem Einlauf in die Heizeinrichtung sterilisiert werden oder auch unmittelbar vor ihrem Einlauf in die Heizeinrichtung gefertigt werden und auf diese Weise steril gehalten werden können.

Vorzugsweise ist dabei wenigstens eine den Sterilraum ausbildende Wandung beweglich ausgebildet. So ist es möglich, dass sich eine Wandung des Sterilraums mit den Kunststoffvorformlingen mitbewegt. Auf diese Weise können räumlich relativ kleine Sterilräume ausgebildet werden, die entsprechend relativ einfach steril zu halten sind. Es wäre jedoch auch möglich, dass ein Sterilraum stationär ausgebildet ist und beispielsweise die vollständige Heizeinrichtung umgibt.

Vorteilhaft ist auch wenigstens eine den Sterilraum abgrenzende Wandung stationär ausgebildet. Über diese stationäre Wandung können beispielsweise die Kunststoffvorformlinge der Heizeinrichtung zugeführt werden.

Bei einer weiteren vorteilhaften Ausführungsform weist die Transporteinrichtung einen drehbaren Träger auf, an dem wenigstens ein Halteelement zum Halten der Kunststoffvorformlinge angeordnet ist. So kann - ähnlich wie bei Füll- oder Blasmaschinen - die Heizeinrichtung mit einem Heizrad ausgebildet sein, an dem wenigstens ein und bevorzugt eine Vielzahl von Halteelementen angeordnet ist, mit denen die Kunststoffvorformlinge transportiert werden. Vorteilhaft wird dabei - wie oben erwähnt - mit diesen Halteelementen wenigstens eine Wandung des besagten Sterilraums mitbewegt. Bei dieser Bewegung werden daher die Behältnisse entlang einer kreis- oder kreissegmentförmigen Bahn bewegt. Vorteilhaft ist dabei diejenige Wandung des Sterilraums, welche bezüglich der Behältnisse radial innen liegt, beweglich angeordnet und diejenige Wandung, welche bezüglich der zu erwärmenden Behältnisse radial außen liegt, stationär. Die Transporteinrichtung fördert hier die Behältnisse vereinzelt.

Bei einer weiteren vorteilhaften Ausführungsform weist die Erwärmungseinrichtung wenigstens eine Mikrowellenerzeugungseinrichtung auf. Die hier beschriebene Ausführungsform mittels Sterilraum eignet sich insbesondere für eine Erwärmung der Kunststoffvorformlinge mittels Mikrowellenheizeinrichtungen, da bei derartigen Heizeinrichtungen ein platzmäßig wesentlicher Teil dieser Heizeinrichtungen von dem zu erwärmenden Kunststoffvorformling beabstandet werden kann.

Es wird jedoch darauf hingewiesen, dass es sich bei der Erwärmungseinrichtung auch um einen Infrarotofen handeln kann. Auch wären Kombinationen aus Infrarot und Mikrowellenheizelementen denkbar, etwa in der Art, dass eine Vorwärmung durch Infrarotheizelemente und eine nachfolgende Erwärmung durch Mikrowellenheizelemente durchgeführt wird.

Bei einer weiteren Ausführungsform weist wenigstens ein Halteelement für die Kunststoffvorformlinge einen in die Mündung der Kunststoffvorformlinge einbringbaren Dorn auf. Bei dieser Ausführungsform werden daher die Behältnisse innenseitig an ihren Mündungen geführt. Es wäre jedoch auch möglich, die Behältnisse beispielsweise mittels Klammern an ihren Tragring zu führen. Vorteilhaft werden die Kunststoffvorformlinge derart transportiert, dass deren Mündungen nicht erwärmt werden. So ist es beispielsweise möglich, dass die Kunststoffvorformlinge von oben in eine Mikrowellenheizeinrichtung bzw. einen Resonator eingeführt und dort erwärmt werden.

Bei einer weiteren vorteilhaften Ausführungsform weist die Vorrichtung eine Dichtungseinrichtung auf, welche zwischen wenigstens einer beweglichen Wandung und einer stationären Wandung des Sterilraums angeordnet ist. Durch diese Vorgehensweise ist es möglich, den Sterilraum gegenüber seiner Umgebung abzudichten. Als Dichtungseinrichtung kann dabei beispielsweise ein so genanntes Wasserschloss verwendet werden, welches einen ringförmigen mit Flüssigkeit gefüllten Kanal aufweist, der beispielsweise stationär angeordnet ist, und in dem ein Element der beweglichen Wandung derart gleitet, dass Luft oder ein Gas nicht von dem Sterilraum nach außen dringen kann. Erfindungsgemäß ist der Sterilraum kanalartig um den Transportpfad der Kunststoffvorformlinge ausgebildet. Auf diese Weise kann - wie oben erwähnt - das Volumen des Sterilraums klein gehalten werden. So kann dieser Sterilraum schlauchartig oder auch ring- oder torusförmig bei einer kreisförmigen Bewegung um den Transportpfad der Kunststoffvorformlinge ausgebildet sein.

Bei einer weiteren vorteilhaften Ausführungsform ist wenigstens eine Erwärmungseinrichtung zumindest teilweise außerhalb des Sterilraums angeordnet. Falls beispielsweise eine Mikrowellenheizeinrichtung verwendet wird, könnte das Magnetron dieser Mikrowellenheizeinrichtung außerhalb des Sterilraums angeordnet sein, der Hohlenwellenleiter in den Sterilraum eingeführt werden und der Resonator im Inneren des Sterilraums angeordnet sein.

Vorteilhaft weist die Vorrichtung wenigstens einen Antrieb zum Drehen der Kunststoffvorformlinge um deren Längsachse auf. Weiterhin ist vorteilhaft eine Antriebseinrichtung vorgesehen, welche die Kunststoffvorformlinge auch in einer zu ihrem Transportpfad senkrechten Richtung bewegt, beispielsweise um diese in einen Resonator der Heizeinrichtung einzuführen.

Die vorliegende Offenbarung ist weiterhin auf eine Anlage zum Umformen von Kunststoffvorformlingen zu Kunststoffbehältnissen mit einer Vorrichtung der oben beschriebenen Art gerichtet, sowie einer in einer Transporteinrichtung der Kunststoffbehältnisse nach der Vorrichtung angeordneten Umformungseinrichtung zum Umformen der Kunststoffvorformlinge zu Kunststoffbehältnissen. Vorteilhaft weist die Umformungseinrichtung einen Sterilraum auf, innerhalb dessen die Kunststoffbehältnisse während des Umformungsvorganges transportiert werden und dieser Sterilraum schließt sich zumindest mittelbar und bevorzugt über einen weiteren Sterilraum an den Sterilraum der Vorrichtung zum Erwärmen der Kunststoffvorformlinge an.

Auf diese Weise kann sichergestellt werden, dass zwischen der Heizeinrichtung und der Umformungseinrichtung keine Verunreinigung der Kunststoffvorformlinge mehr auftritt. So wäre es möglich, dass die Heizeinrichtung und die Umformungseinrichtung in einem gemeinsamen Gehäuse bzw. Sterilraum angeordnet sind, es wäre jedoch auch möglich, dass die beiden Sterilräume getrennt voneinander sind, und die Kunststoffvorformlinge von dem einen Sterilraum ohne Kontakt mit der Umgebung in den anderen Sterilraum beispielsweise über Transportsterne oder Schleuseneinrichtungen überführt werden.

Bei einer weiteren vorteilhaften Ausführungsform ist zwischen der Erwärmungseinrichtung für die Kunststoffvorformlinge und der Umformungseinrichtung eine weitere Sterilisationseinrichtung zum Sterilisieren der (erwärmten) Kunststoffvorformlinge angeordnet.

Die vorliegende Erfindung ist weiterhin auf ein Verfahren zum Umformen von Kunststoffvorformlingen zu Kunststoffbehältnissen gemäß Anspruch 13 gerichtet. Vorteilhaft weist die oben genannte Vorrichtung eine Sterilisationseinrichtung zum Sterilisieren der Kunststoffvorformlinge auf. Dabei erfolgt eine Sterilisation dieser Kunststoffvorformlinge bereits während deren Erwärmung. Dabei wären beispielsweise Düseneinrichtungen denkbar, es könnten jedoch auch Emitter für Elektronenstrahlen zum Einsatz kommen.

Bei einer weiteren vorteilhaften Ausführungsform weist die Vorrichtung eine Reinigungseinrichtung auf, um die Vorrichtung selbst zu reinigen. Dabei können beispielsweise Düsen vorgesehen sein, welche Wandungsbereiche des Sterilraums mit einem Sterilisationsmedium beaufschlagen. Dabei können sowohl an den beweglichen Wandungen derartige Düsen angeordnet sein, um die stationären Wandungen oder allgemein stationäre Elemente zu reinigen als auch an den stationären Wandungen bzw. an stationären Elementen der Vorrichtung angeordnete Düsen, welche die jeweils beweglichen Wandungen reinigen. Auf diese Weise ist eine so genannte CIP-Reinigung (cleaning in place) der Vorrichtung möglich.

Weitere Vorteile und Ausführungsformen ergeben sich aus den beigefügten Zeichnungen.

Darin zeigen:
- Fig. 1: eine Anlage zum Behandeln von Behältnissen;
- Fig. 2: eine Detaildarstellung einer Vorrichtung;
- Fig. 3: eine weitere Detaildarstellung einer Vorrichtung; und
- Fig. 4: eine weitere Darstellung einer Heizeinrichtung.

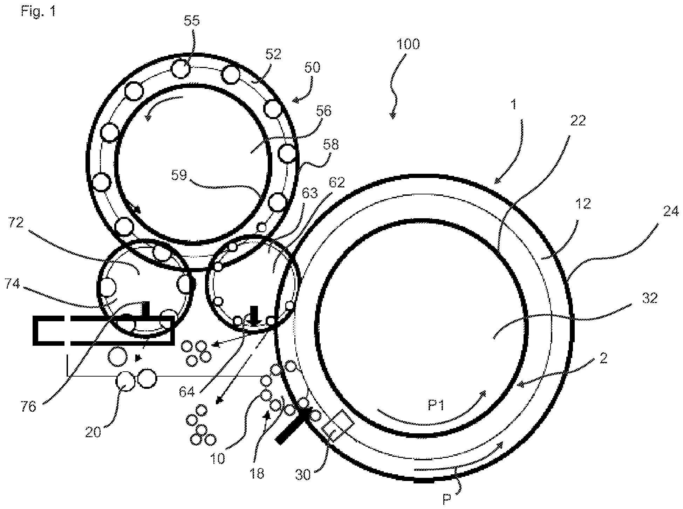

Fig. 1 zeigt eine schematische Darstellung einer Anlage 100 zum Behandeln von Behältnissen. Dabei werden Kunststoffvorformlinge 10 über ein Zuführrad 18 einer in ihrer Gesamtheit mit 1 bezeichneten Vorrichtung zum Erwärmen der Kunststoffvorformlinge zugeführt. Diese Vorrichtung 1 zum Erwärmen von Kunststoffvorformlingen weist dabei einen entlang des Pfeils P1 drehbaren Träger 32 auf, an dem hier eine Vielzahl (nicht gezeigt) von Erwärmungseinrichtungen zum Erwärmen von Kunststoffvorformlingen angeordnet ist. Der Träger 32 ist damit hier Bestandteil einer insgesamt mit 2 bezeichneten Transporteinrichtung zum Transportieren der Kunststoffvorformlinge

Dabei werden die Behältnisse an dem Träger 32 entlang eines Transportpfades P, d. h. hier entlang eines kreisförmigen Transportpfades P bewegt. Das Bezugszeichen 12 bezieht sich auf einen nur schematisch dargestellten Sterilraum, innerhalb dessen die Behältnisse während des vollständigen Erwärmungsvorgangs transportiert werden. Dieser Sterilraum 12 wird hier durch eine innere Wand 22 und eine äußere Wand 24 begrenzt. Auf diese Weise kann das Volumen des Sterilraums 12 im Vergleich zu der Gesamtgröße der Vorrichtung 1 relativ klein gehalten werden. Der Sterilraum 12 weist damit hier einen ring(segment)förmigen Querschnitt auf.

Im Anschluss an die Erwärmung werden die Kunststoffvorformlinge über ein Transferrad 62 an eine Blasmaschine 50 übergeben. Das Bezugszeichen 64 kennzeichnet eine Auswurfeinrichtung, welche fehlerhafte Vorformlinge oder falsch erwärmte Vorformlinge aussondiert. Die Blasmaschine weist wiederum ein Blasrad 56 mit einer Vielzahl darin angeordneter Blasstationen 55 auf. Innerhalb dieser Blasstationen 55 werden die Kunststoffvorformlinge zu Kunststoffbehältnissen expandiert. Auch die Blasmaschine 50 bildet dabei einen hier ringförmigen Sterilraum 52 aus, der wiederum von einer stehenden Wand 58 und einer beweglichen Wand 59 begrenzt wird. Das Bezugszeichen 63 kennzeichnet einen weiteren Sterilraum, in dem die Behältnisse während des Transfers von der Vorrichtung 1 zu der Blasmaschine 50 transportiert werden.

An die Blasmaschine 50 schließt sich eine Abführeinrichtung 72 an, über welche die Kunststoffbehältnisse abgeführt werden. Auch diese Abführeinrichtung 72 weist dabei einen Transportstern 74 auf, sowie eine Auswurfeinrichtung, welche wiederum dazu dient, um fehlerhaft hergestellte Behältnisse 20 auszuschleusen. An diese Blasmaschine kann sich beispielsweise eine Füllmaschine anschließen, welche die nunmehr hergestellten Behältnisse mit einer Flüssigkeit befüllt.

Das Bezugszeichen 30 kennzeichnet eine Sterilisationseinrichtung, welche die in die Vorrichtungen 1 einlaufenden Kunststoffvorformlinge sterilisiert, beispielsweise durch Beaufschlagung derselben mit einem Sterilisationsmedium. Diese Sterilisationseinrichtung 30 kann dabei beweglich ausgestaltet sein, sich also mit den Behältnissen mitbewegen oder auch stationär sein.

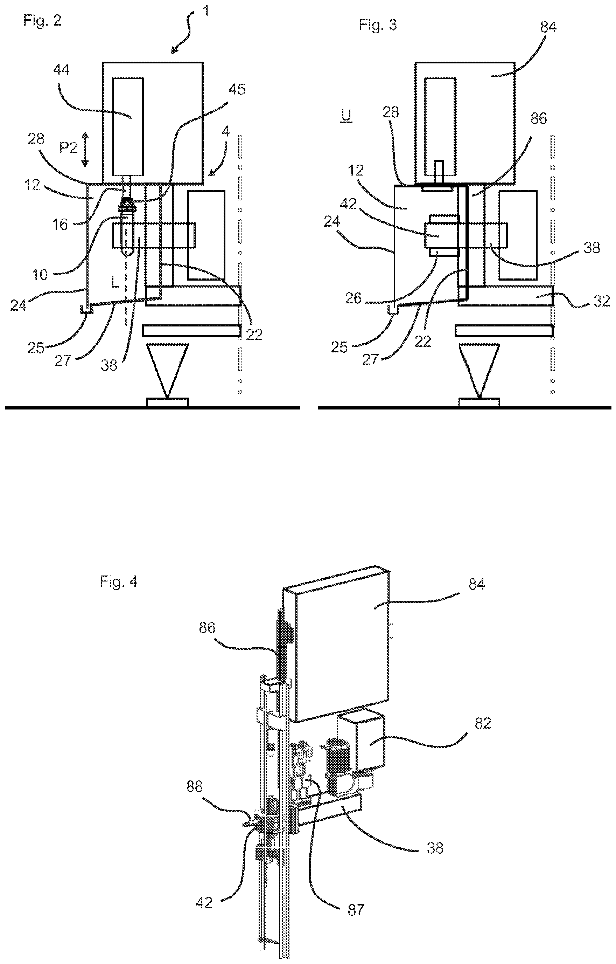

Fig. 2 zeigt eine Detaildarstellung einer Vorrichtung 1. Dabei ist hier ein Halteelement 45 vorgesehen, welches in eine Mündung der Kunststoffvorformlinge 10 eindringt und diese auf diese Weise hält und transportiert. Das Bezugszeichen 44 kennzeichnet einen Antrieb, der eine Drehung der Kunststoffvorformlinge 10 um deren Längsachse bewirkt. Weiterhin kann mittels des Antriebs 44 auch eine Hub- und/oder Senkbewegung des Kunststoffvorformlings 10 entlang des Pfeils P2 erreicht werden. Das Bezugszeichen 16 kennzeichnet grob schematisch einen Faltenbalg, der zum abdichten dieser Hubbewegung dient, sodass die Hubbewegung auch innerhalb des Sterilraums 12 stattfinden kann.

Das Bezugszeichen 4 kennzeichnet in seiner Gesamtheit die Erwärmungseinrichtung zum Erwärmen der Kunststoffvorformlinge.

Fig. 3 zeigt eine weitere Darstellung der in Fig. 2 gezeigten Vorrichtung. Hier ist, wie auch in Fig. 2 der Sterilraum 12 dargestellt, der hier durch eine stationäre äußere Wand 24 und eine bewegliche Wand 22 ausgebildet wird. Das Bezugszeichen 25 kennzeichnet grob schematisch eine Dichtungseinrichtung, um die Bewegung der beweglichen Wand 22 gegenüber der stationären Wand 24 abzudichten. Dabei kann es sich, wie oben erwähnt, um ein sogenanntes Wasserschloss handeln. Das Bezugszeichen 27 kennzeichnet eine untere Wand, welche den Sterilraum 12 nach unten abgrenzt und das Bezugszeichen 28 eine obere Wand, welche den Sterilraum 12 nach oben hin abgrenzt.

Die untere Wand 27 sowie die obere Wand 28 sind dabei bevorzugt beweglich, d.h. sie drehen sich mit den Behältnissen mit. Auch zwischen der oberen Wand 28 und der äußeren (stationären) Wand 24 kann dabei eine (nicht gezeigte) Dichtungseinrichtung vorgesehen sein. Die untere Wand 27 sowie die obere Wand 28 können dabei einteilig mit der inneren beweglichen Wand 22 ausgebildet sein. Daneben kann auch eine (nicht gezeigte) Zuführeinrichtung vorgesehen sein, welche ein Sterilmedium wie beispielsweise Sterilluft in den Sterilraum 12 einführt, wobei hierzu vorteilhaft der Druck des Sterilmediums innerhalb des Sterilraums 12 größer gehalten wird als ein Umgebungsdruck in der Umgebung U außerhalb des Sterilraums 12.

Das Bezugszeichen 84 kennzeichnet einen Bestandteil der Heizeinrichtung, wie beispielsweise einen Magnetron, welches Mikrowellen erzeugt. Das Bezugszeichen 86 kennzeichnet einen Wellenhohlleiter, der die Mikrowellen über einen weiteren Hohlleiter 38 zu einem Resonator 42 führt. Innerhalb des Resonators 42 werden die Kunststoffvorformlinge durch Beaufschlagung mit Mikrowellen erwärmt. Das Bezugszeichen 26 kennzeichnet Verschlusskappen, um zu Reinigungszwecken den Resonator 42 oben und unten abzudecken.

Fig. 4 zeigt eine weitere Darstellung der Heizeinrichtung. Hierbei ist insbesondere eine Reinigung des Resonators 42 dargestellt. Dabei kann durch den Hohlleiter 86, 38 ein Reinigungsmedium eingeführt werden, welches in einem Reservoir 82 zur Verfügung gestellt wird. Das Bezugszeichen 87 kennzeichnet Tuningelemente, zum Abstimmen des Resonators bzw. der Mikrowellenleistung, beispielsweise sogenannte Tuningstifte, die in den Hohlleiter 38 einführbar sind.

Das Bezugszeichen 88 kennzeichnet eine Sensoreinrichtung, welche vorteilhaft berührungslos eine Erwärmung der Kunststoffvorformlinge feststellt.

Die in den Figuren 3 und 4 gezeigten Ausführungsformen erlauben daher auch eine sogenannte CIP-Reinigung (Cleaning in Place) der jeweiligen Resonatoren 42.

### Bezugszeichenliste

- 1: Vorrichtung
- 2: Transporteinrichtung
- 4: Erwärmungseinrichtung
- 10: Kunststoffvorformlinge
- 12: Sterilraum
- 16: Faltenbalg
- 18: Zuführrad
- 20: (fehlerhaft hergestelltes) Behältnis
- 22: innere Wand
- 24: äußere Wand
- 25: Dichtungseinrichtung
- 26: Verschlusskappen
- 27: untere Wand
- 28: obere Wand
- 30: Sterilisationseinrichtung
- 32: Träger
- 38: Resonator, Hohlleiter
- 42: Resonator
- 44: Antrieb
- 45: Halteelement
- 50: Blasmaschine
- 52: Sterilraum
- 55: Blasstation
- 56: Blasrad
- 58: stehende Wand
- 59: bewegliche Wand
- 62: Transferrad
- 63: Sterilraum
- 64: Auswurfeinrichtung
- 72: Abführeinrichtung
- 74: Transportstern
- 82: Reservoir
- 84: Bestandteil der Heizeinrichtung
- 86: Wellenhohlleiter
- 87: Tuningelemente
- 88: Sensoreinrichtung
- 100: Anlage

- P: Transportpfad
- P1: Pfeil
- P2: Pfeil
- U: Umgebung
- L: Längsrichtung

## Patentansprüche

1. Vorrichtung (1) zum Erwärmen von Kunststoffvorformlingen (10), mit einer Transporteinrichtung (2), welche die Kunststoffvorformlinge entlang eines vorbestimmten Transportpfades (P) transportieren kann, und mit wenigstens einer Erwärmungseinrichtung (4), welche die Kunststoffvorformlinge während ihres Transports erwärmen kann, wobei der Transportpfad (P) der Kunststoffvorformlinge wenigstens abschnittsweise durch einen Sterilraum (12) verläuft, wobei dieser Sterilraum (12) durch eine Vielzahl von Wandungen (22, 24, 27, 28) gegenüber der Umgebung (U) abgegrenzt ist, **dadurch gekennzeichnet, dass** der Sterilraum (12) kanalartig um den Transportpfad (P) der Kunststoffvorformlinge (10) ausgebildet ist.

2. Vorrichtung (1) nach Anspruch 1,
**dadurch gekennzeichnet, dass**
wenigstens eine den Sterilraum abgrenzende Wandung (22) beweglich ausgebildet ist.

3. Vorrichtung (1) nach Anspruch 1,
**dadurch gekennzeichnet, dass**
wenigstens eine den Sterilraum (12) abgrenzende Wandung (24) stationär angeordnet ist.

4. Vorrichtung (1) nach wenigstens einem der vorangegangenen Ansprüche,
**dadurch gekennzeichnet, dass**
die Transporteinrichtung (2) einen drehbaren Träger (32) aufweist, an dem wenigstens ein Halteelement (45) zum Halten der Kunststoffvorformlinge (10) angeordnet ist.

5. Vorrichtung (1) nach wenigstens einem der vorangegangenen Ansprüche,
**dadurch gekennzeichnet, dass**
die Erwärmungseinrichtung (4) eine Mikrowellenerzeugungseinrichtung (84) aufweist.

6. Vorrichtung (1) nach wenigstens einem der vorangegangenen Ansprüche,
**dadurch gekennzeichnet, dass**
die Vorrichtung wenigstens einen Antrieb (44) zum Drehen der Kunststoffvorformlinge (10) um deren Längsachse (L) aufweist.

7. Vorrichtung (1) nach wenigstens einem der vorangegangenen Ansprüche,
**dadurch gekennzeichnet, dass**
wenigstens ein Halteelement einen in eine Mündung der Kunststoffvorformlinge (10) einbringbaren Dorn aufweist.

8. Vorrichtung (1) nach wenigstens einem der vorangegangenen Ansprüche,
**dadurch gekennzeichnet, dass**
die Vorrichtung (1) eine Dichtungseinrichtung (25) aufweist, welche zwischen wenigstens einer beweglichen Wandung (26) und einer stationären Wandung (24) des Sterilraums (12) angeordnet ist.

9. Vorrichtung (1) nach wenigstens einem der vorangegangenen Ansprüche,
**dadurch gekennzeichnet, dass**
wenigstens eine Erwärmungseinrichtung zumindest teilweise außerhalb des Sterilraums (12) angeordnet ist.

10. Vorrichtung (1) nach wenigstens einem der vorangegangenen Ansprüche,
**dadurch gekennzeichnet, dass**
die Vorrichtung (1) eine Sterilisationseinrichtung (30) zum Sterilisieren der Kunststoffvorformlinge (10) aufweist.

11. Anlage (100)zum Umformen von Kunststoffvorformlingen (10) zu Kunststoffbehältnissen (20) mit einer Vorrichtung (1) nach wenigstens einem der vorangegangenen Ansprüchen und einer in einer Transportrichtung der Kunststoffvorformlinge (10) nach der Vorrichtung (1) angeordneten Umformungseinrichtung (50) zum Umformen der Kunststoffvorformlinge (10) zu Kunststoffbehältnissen (20).

12. Anlage nach Anspruch 12,
**dadurch gekennzeichnet, dass**
die Umformungseinrichtung (50) einen Sterilraum (52) aufweist, innerhalb dessen die Kunststoffbehältnisse während des Umformungsvorgangs transportiert werden und sich dieser Sterilraum (52) zumindest mittelbar an den Sterilraum (12) der Vorrichtung (1) anschließt.

13. Verfahren zum Umformen von Kunststoffvorformlingen (10) zu Kunststoffbehältnissen (20), wobei Kunststoffvorformlinge (10) entlang eines vorgegebenen Transportpfades (P) durch eine Heizeinrichtung (1) transportiert und während dieses Transports erwärmt werden und im Anschluss an die Erwärmung von einer Umformungseinrichtung (50) zu Kunststoffbehältnissen (20) umgeformt werden, wobei die Kunststoffvorformlinge (10) während der Erwärmung wenigstens abschnittsweise durch einen Sterilraum (12) transportiert werden, **dadurch gekennzeichnet, dass** der Sterilraum (12) kanalartig um den Transportpfad (P) der Kunststoffvorformlinge (10) ausgebildet ist.

## Claims

1. An apparatus (1) for the heating of plastics material preforms (10), with a conveying device (2) which can convey the plastics material preforms along a predetermined conveying path (P), and with at least one heating device (4) which can heat the plastics material preforms during the transportation thereof,
wherein
the conveying path (P) of the plastics material preforms extends at least locally through a sterile room (12), wherein this sterile room (12) is separated from the environment (U) by a plurality of walls (22, 24, 27, 28),
**characterized in that**
the sterile room (12) is designed in the manner of a duct around the conveying path (P) of the plastics material preforms (10).

2. An apparatus (1) according to claim 1,
**characterized in that**
at least one wall (22) bounding the sterile room is made movable.

3. An apparatus (1) according to claim 1,
**characterized in that**
at least one wall (24) separating the sterile room (12) is made stationary.

4. An apparatus (1) according to at least one of the preceding claims,
**characterized in that**
the conveying device (2) has a rotatable carrier (32) on which at least one holding element (45) for holding the plastics material preforms (10) is arranged.

5. An apparatus (1) according to at least one of the preceding claims,
**characterized in that**
the heating device (4) has a microwave generation device (84).

6. An apparatus (1) according to at least one of the preceding claims,
**characterized in that**
the apparatus has at least one drive (44) for rotating the plastics material preforms (10) about the longitudinal axis (L) thereof.

7. An apparatus (1) according to at least one of the preceding claims,
**characterized in that**
at least one holding element has a mandrel capable of being introduced into the aperture of the plastics material preforms (10).

8. An apparatus (1) according to at least one of the preceding claims,
**characterized in that**
the apparatus (1) has a sealing device (25) which is arranged between at least one movable wall (26) and a stationary wall (24) of the sterile room (12).

9. An apparatus (1) according to at least one of the preceding claims,
**characterized in that**
at least one heating device is arranged at least in part outside the sterile room (12).

10. An apparatus (1) according to at least one of the preceding claims,
**characterized in that**
the apparatus (1) has a sterilization device (30) for sterilizing the plastics material preforms (10).

11. A plant (100) for shaping plastics material preforms (10) into plastics material containers (20) with an apparatus (1) according to at least one of the preceding claims, and a shaping device (50) for shaping the plastics material preforms (10) into plastics material containers (20) which is arranged downstream of the apparatus (1) in a conveying direction of the plastics material containers (10).

12. A plant according to claim 11,
**characterized in that**
the shaping device (50) has a sterile room (52), inside which the plastics material containers are conveyed during the shaping procedure and this sterile room (52) follows at least indirectly the sterile room (12) of the apparatus (1).

13. A method of shaping plastics material preforms (10) into plastics material containers (20), wherein plastics material preforms (10) are conveyed along a preset conveying path (P) through a heating device (1) and are heated during this transportation, and following the heating they are shaped by a shaping device (50) to form plastics material containers (20),
wherein
during the heating the plastics material preforms (10) are conveyed at least locally through a sterile room (12),
**characterized in that**
the sterile room (12) is designed in the manner of a duct around the conveying path (P) of the plastics material preforms (10).

## Revendications

1. Dispositif (1) de chauffage d'ébauches en matière plastique (10), comprenant un moyen de transport (2), lequel peut transporter les ébauches en matière plastique le long d'un trajet de transport (P) prédéfini, et comprenant au moins un moyen de chauffage (4), lequel peut chauffer les ébauches en matière plastique pendant leur transport, dans lequel
le trajet de transport (P) des ébauches en matière plastique s'étend au moins en partie à travers une chambre stérile (12), dans lequel cette chambre stérile (12) est délimitée par rapport à l'environnement (U) par une pluralité de parois (22, 24, 27, 28),
**caractérisé en ce que**
la chambre stérile (12) est formée à la façon d'un canal autour du trajet de transport (P) des ébauches en matière plastique (10).

2. Dispositif (1) selon la revendication 1,
**caractérisé en ce que**
au moins une paroi (22) délimitant la chambre stérile est mobile.

3. Dispositif (1) selon la revendication 1,
**caractérisé en ce que**
au moins une paroi (24) délimitant la chambre stérile (12) est fixe.

4. Dispositif (1) selon au moins l'une des revendications précédentes,
**caractérisé en ce que**
le moyen de transport (2) comprend un support (32) rotatif, sur lequel est agencé au moins un élément de retenue (45) destiné à retenir les ébauches en matière plastique (10).

5. Dispositif (1) selon au moins l'une des revendications précédentes,
**caractérisé en ce que**
le moyen de chauffage (4) comprend un moyen de génération de micro-ondes (84).

6. Dispositif (1) selon au moins l'une des revendications précédentes,
**caractérisé en ce que**
le dispositif comprend au moins un entraînement (44) destiné à faire tourner les ébauches en matière plastique (10) autour de leur axe longitudinal (L).

7. Dispositif (1) selon au moins l'une des revendications précédentes,
**caractérisé en ce que**
au moins un élément de retenue comprend un mandrin pouvant être introduit dans une embouchure des ébauches en matière plastique (10).

8. Dispositif (1) selon au moins l'une des revendications précédentes,
**caractérisé en ce que**
le dispositif (1) comprend un moyen d'étanchéité (25), lequel est agencé entre au moins une paroi (26) mobile et une paroi (24) fixe de la chambre stérile (12).

9. Dispositif (1) selon au moins l'une des revendications précédentes,
**caractérisé en ce que**
au moins un moyen de chauffage est agencé au moins en partie à l'extérieur de la chambre stérile (12).

10. Dispositif (1) selon au moins l'une des revendications précédentes,
**caractérisé en ce que**
le dispositif (1) comprend un moyen de stérilisation (30) destiné à stériliser les ébauches en matière plastique (10).

11. Installation (100) de transformation d'ébauches en matière plastique (10) en contenants en matière plastique (20), comprenant un dispositif (1) selon au moins l'une des revendications précédentes et un système de façonnage (50) agencé en aval du dispositif (1) dans une direction de transport des ébauches en matière plastique (10) et destiné à transformer les ébauches en matière plastique (10) en contenants en matière plastique (20).

12. Installation selon la revendication 12,
**caractérisée en ce que**
le système de façonnage (50) comprend une chambre stérile (52), à l'intérieur de laquelle les contenants en matière plastique sont transportés pendant la procédure de façonnage et cette chambre stérile (52) se raccorde au moins indirectement à la chambre stérile (12) du dispositif (1).

13. Procédé de transformation d'ébauches en matière plastique (10) en contenants en matière plastique (20), dans lequel les ébauches en matière plastique (10) sont transportées le long d'un trajet de transport (P) prédéfini à travers un moyen de chauffage (1) et sont chauffées pendant ce transport et, immédiatement après avoir été chauffées, sont transformées par un système de façonnage (50) en contenants en matière plastique (20),
dans lequel
les ébauches en matière plastique (10) sont transportées pendant le chauffage au moins en partie à travers une chambre stérile (12), **caractérisé en ce que**
la chambre stérile (12) est formée à la façon d'un canal autour du trajet de transport (P) des ébauches en matière plastique (10).
